# EUROPEAN PATENT SPECIFICATION

(11) **EP 4 050 448 B1**
(45) Date of publication and mention of the grant of the patent: **24.06.2026**
(21) Application number: 22158112.7
(22) Date of filing: 23.02.2022
(51) Int. Cl.: G05D 1/00

(54) **REMOTE SUPPORT SYSTEM, REMOTE SUPPORT METHOD, AND NON-TRANSITORY STORAGE MEDIUM**
FERNUNTERSTÜTZUNGSSYSTEM, FERNUNTERSTÜTZUNGSVERFAHREN UND NICHTFLÜCHTIGES SPEICHERMEDIUM
SYSTÈME D'ASSISTANCE À DISTANCE, PROCÉDÉ D'ASSISTANCE À DISTANCE, ET SUPPORT D'ENREGISTREMENT NON TRANSITOIRE

(30) Priority: 24.02.2021 JP 2021027860
(43) Date of publication of application: 31.08.2022
(73) Proprietor: TOYOTA JIDOSHA KABUSHIKI KAISHA, Toyota-shi, Aichi-ken 471-8571 (JP)
(72) Inventor: HAYASHI, Yusuke, Toyota-shi, Aichi-ken 471-8571 (JP); KAWANAI, Taichi, Toyota-shi, Aichi-ken 471-8571 (JP)
(74) Representative: Cabinet Beau de Loménie

(56) References cited:
- US-A1- 2015 248 131
- US-A1- 2018 196 437

## Description

### BACKGROUND OF THE INVENTION

### 1. Field of the Invention

The present disclosure relates to remote support systems, remote support methods, and non-transitory storage media for sending a remote control request for a vehicle to a remote operator.

### 2. Description of Related Art

Japanese Unexamined Patent Application Publication No. 2018-77649 (JP 2018-77649 A) discloses a technique relating to a remote control device for causing a remote operator to perform remote control of a vehicle. With this device, the remote operator remotely controls the vehicle in response to a remote control request sent from the vehicle that drives autonomously. US 2018/196437 discloses a trajectory assistance for autonomous vehicles and US 2015/248131 discloses remote assistance for autonomous vehicles in predetermined situations.

### SUMMARY OF THE INVENTION

It is herein assumed that when a vehicle that drives autonomously is predicted to have difficulty continuing autonomous driving, the vehicle sends a remote control request and corrects a current travel plan to a travel plan in which the vehicle waits for remote control. In this case, when whether the vehicle can continue autonomous driving is predicted with emphasis on safety, an object to be avoided can be detected at an early timing and a remote control request can be sent at an early timing, but the vehicle starts being slowed down at an early timing. This may reduce running efficiency and comfort. On the other hand, when whether the vehicle can continue autonomous driving is predicted with emphasis on running efficiency, it is expected that the timing of sending a remote control request will be delayed. In this case, the vehicle will stay stopped on the road in order to wait for remote control, and may disturb the traffic flow. As described above, there is room for improvement in achieving both safety and running efficiency when the vehicle sends a remote control request during autonomous driving.

The present disclosure provides a remote support system, a remote support method, and a non-transitory storage medium that can send a remote control request with emphasis on safety while preventing a decrease in running efficiency.

A first aspect of the present disclosure is a remote support system configured to send a remote control request to a remote operator when a vehicle configured to drive autonomously is predicted to have difficulty continuing autonomous driving, the remote control request being a request requesting remote control of the vehicle, as defined in claim 1.

In the first aspect, the determination process has a predicted trajectory generation process, the predicted trajectory generation process being a process of generating a future predicted trajectory of an object to be avoided based on the driving environment information. The at least one processor may be configured to determine whether the vehicle has difficulty continuing the autonomous driving based on the predicted trajectory and the travel trajectory.

In an aspect not claimed per se, the evaluation criterion may have an evaluation criterion related to likelihood of the object to be avoided. The determination process may have acquiring a likelihood index value, the likelihood index value being a value representing a degree of likelihood of a detected landmark detected based on the driving environment information. The determination process may have setting the detected landmark as the object to be avoided when the acquired likelihood index value is higher than a predetermined determination threshold. In the determination process, the determination threshold of the first evaluation criterion may be lower than the determination threshold of the second evaluation criterion.

In an aspect not claimed per se, the evaluation criterion may have an evaluation criterion related to a complying possibility of the object to be avoided. The complying possibility may be a possibility complying with a traffic rule. In the predicted trajectory generation process, the predicted trajectory of the object to be avoided may be generated by using the complying possibility. A first complying possibility may be lower than a second complying possibility, the first complying possibility may be the complying possibility of the first evaluation criterion, and the second complying possibility may be the complying possibility of the second evaluation criterion.

In an aspect not claimed per se, the evaluation criterion may have an evaluation criterion related to a maintaining possibility of the object to be avoided. The maintaining possibility may be a possibility maintaining a current operating state of the object to be avoided. In the predicted trajectory generation process, the predicted trajectory of the object to be avoided may be generated by using the maintaining possibility. A first maintaining possibility may be lower than a second maintaining possibility, the first maintaining possibility may be the maintaining possibility of the first evaluation criterion, and the second maintaining possibility may be the maintaining possibility of the second evaluation criterion..

In the first aspect, the determination process includes an intersection determination process, the intersection determination process being a process of determining whether the predicted trajectory and the travel trajectory intersect. The at least one processor is configured to determine based on a determination result of the intersection determination process whether the vehicle is going to have difficulty continuing the autonomous driving. The first evaluation criterion and the second evaluation criterion include an evaluation criterion regarding an error range allowed in the intersection determination process. In the intersection determination process, the error range of the first evaluation criterion may be narrower than the error range of the second evaluation criterion.

A second aspect of the present disclosure is a remote support method as defined in claim 2.

A third aspect of the present disclosure is a non-transitory storage medium storing instructions that are executable by one or more processors and that cause the one or more processors to perform functions, as defined in claim 3.

According to the first, second, and third aspects of the present disclosure, in the determination process of determining the necessity of sending the remote control request, whether the vehicle that drives autonomously is going to have difficulty continuing autonomous driving can be determined based on the first evaluation criterion that focuses on safety. Moreover, in the determination process of determining the necessity of correcting the travel trajectory, whether the vehicle that drives autonomously is going to have difficulty continuing autonomous driving can be determined based on the second evaluation criterion that focuses on running efficiency. According to such a configuration, the necessity of correcting the travel trajectory can be determined with emphasis on running efficiency, and the necessity of sending a remote control request can be determined with emphasis on safety. Accordingly, the remote control request can be sent with emphasis on safety while preventing a decrease in running efficiency.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a block diagram showing a configuration example illustrating an overview of a remote support system of a first embodiment;
FIG. 2 is a block diagram showing an example of the configuration of an autonomous vehicle;
FIG. 3 illustrates an example of a situation in which remote control is performed in the remote support system of the first embodiment;
FIG. 4 illustrates an example of a situation in which remote control is performed in the remote support system of the first embodiment;
FIG. 5 is a functional block diagram showing a part of functions of an autonomous driving control device;
FIG. 6 is a flowchart of a process that is performed by the autonomous driving control device;
FIG. 7 illustrates a modification of the autonomous driving control device of the first embodiment; and
FIG. 8 illustrates another modification of the autonomous driving control device of the first embodiment.

### DETAILED DESCRIPTION OF EMBODIMENTS

An embodiment of the present disclosure will be described with reference to the drawings. Numerical values for each element that are mentioned in the following embodiment, such as the number, quantity, amount, and range of each element, are not intended to limit the present disclosure to the mentioned numerical values unless otherwise specified or unless it is theoretically obvious that the present disclosure is limited to the mentioned numerical values. Structures, steps, etc. that are described in the following embodiment are not necessarily essential to the present disclosure unless otherwise specified or unless it is theoretically obvious that the structures, steps, etc. are essential to the present disclosure.

### First Embodiment

### 1-1. Overall Configuration of Remote Support System of First Embodiment

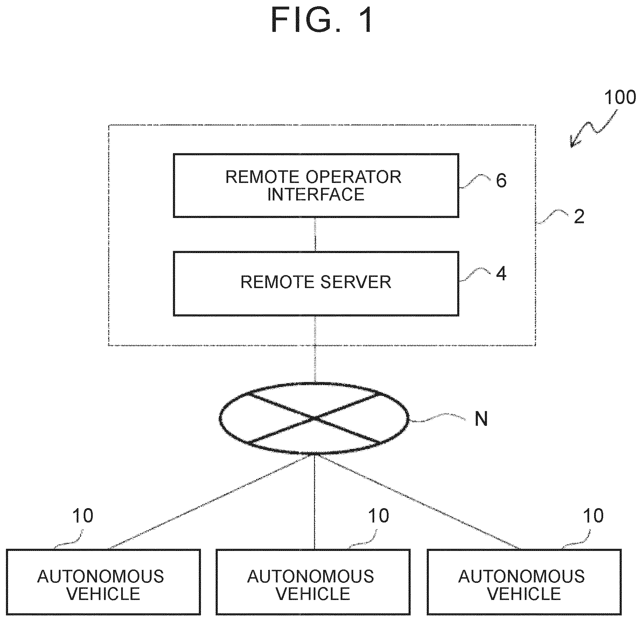

First, a schematic configuration of a remote support system of a first embodiment will be described. FIG. 1 is a block diagram showing a configuration example illustrating an overview of the remove support system of the first embodiment. A remote support system 100 shown in FIG. 1 is a system that performs remote control for controlling traveling of an autonomous vehicle 10 when the autonomous vehicle 10 is predicted to have difficulty continuing autonomous driving. Hereinafter, the autonomous vehicle 10 that is used in the remote support system 100 is sometimes simply referred to as the "vehicle 10."

Remote control includes not only remote control including operation commands for any of acceleration, deceleration, and steering of the vehicle, but also driver assistance for assisting a part of perception or determination of the surrounding environment of the vehicle 10. Remote control is performed by a remote operator who stands by at a remote location. The number of remote operators who are used in the remote support system 100 is not limited. The number of vehicles 10 that are used in the remote support system 100 is not limited, either.

As shown in FIG. 1, the remote support system 100 includes the vehicles 10 and a remote control device 2. The remote control device 2 includes a remote server 4 and a remote operator interface 6 for the remote operator to perform input operations for remote control. The remote server 4 is connected to the vehicles 10 via a communication network N so that the remote server 4 can communicate with the vehicles 10. Various kinds of information are sent from the vehicles 10 to the remote server 4. The remote operator interface 6 includes, for example, an input device simulating a steering wheel, an accelerator pedal, and a brake pedal of a vehicle. Alternatively, the remote operator interface 6 includes an input device for inputting determination results during driver assistance.

In the remote support system 100, when the vehicle 10 that drives autonomously is predicted to have difficulty continuing autonomous driving, the vehicle 10 sends a remote control request that requests remote control of the vehicle 10. In the remote support system 100, the remote operator performs remote control via the remote control device 2 in response to a remote control request sent from the vehicle 10. Typically, the remote operator performs input operations for remote control to the remote operator interface 6. The remote server 4 sends remote control commands to the vehicle 10 via the communication network N. The vehicle 10 travels according to the remote control commands sent from the remote control device 2. Since related art can be used for the configuration of the remote control device 2, detailed description of the configuration of the remote control device 2 will be omitted.

### 1-2. Configuration of Autonomous Vehicle of First Embodiment

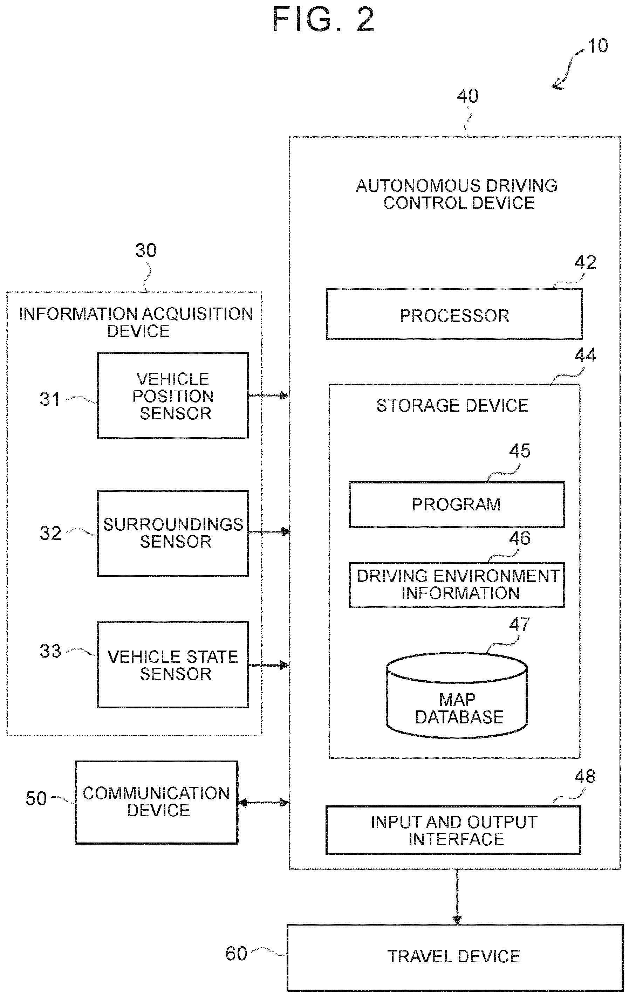

Next, an example of the configuration for autonomous driving of the autonomous vehicle 10 that is applied to the remote support system 100 of the first embodiment will be described. FIG. 2 is a block diagram showing an example of the configuration of the autonomous vehicle 10. The vehicle 10 is an autonomous vehicle capable of autonomous driving. Regarding autonomous driving, it is herein assumed that the vehicle 10 drives at Level 3 or higher of driving automation defined by the Society of Automotive Engineers (SAE). The power source of the vehicle 10 is not limited.

The vehicle 10 includes an autonomous driving control device 40. The autonomous driving control device 40 has a function to perform autonomous driving of the vehicle 10 and a function to perform remote autonomous driving of the vehicle 10 according to remote control commands sent from the remote operator. An information acquisition device 30, a communication device 50, and a travel device 60 are connected to the autonomous driving control device 40.

The information acquisition device 30 includes a vehicle position sensor 31, a surroundings sensor 32, and a vehicle state sensor 33.

The vehicle position sensor 31 detects the position and orientation of the vehicle 10. For example, the vehicle position sensor 31 includes a Global Positioning System (GPS) sensor. The GPS sensor receives signals sent from a plurality of GPS satellites and calculates the position and orientation of the vehicle 10 based on the received signals. The vehicle position sensor 31 may perform localization to increase the accuracy of the current position of the vehicle 10. The information detected by the vehicle position sensor 31 is sent to the autonomous driving control device 40 as necessary as a part of surrounding environment information.

The surroundings sensor 32 perceives surroundings information of the vehicle 10. Examples of the surroundings sensor 32 include a camera (imaging device), a laser imaging detection and ranging (LIDAR), and a radar. The surroundings information includes landmark information perceived by the surroundings sensor 32. Examples of a landmark include surrounding vehicles, pedestrians, roadside objects, obstacles, white lines, and traffic lights. The landmark information includes the position and speed of the landmark relative to the vehicle 10. The information perceived by the surroundings sensor 32 is sent to the autonomous driving control device 40 as necessary as a part of the surrounding environment information.

The vehicle state sensor 33 detects vehicle information indicating the state of the vehicle 10. Examples of the vehicle state sensor 33 include a vehicle speed sensor, a lateral acceleration sensor, and a yaw rate sensor. The information detected by the vehicle state sensor 33 is sent to the autonomous driving control device 40 as necessary as a part of vehicle motion information.

The communication device 50 communicates with the outside of the vehicle 10. For example, the communication device 50 sends and receives various kinds of information to and from the remote control device 2 via the communication network N. The communication device 50 also communicates with external devices such as roadside units, surrounding vehicles, and surrounding infrastructure. The roadside unit is a beacon device that sends, for example, traffic congestion information, traffic information for each lane, regulation information such as stop, and information on traffic conditions in blind spots. When the external device is a surrounding vehicle, the communication device 50 performs vehicle-to-vehicle communications (V2V communication) with the surrounding vehicle. When the external device is surrounding infrastructure, the communication device 50 performs vehicle-to-infrastructure communication (V2I communication) with the surrounding infrastructure.

The travel device 60 includes a steering device, a drive device, and a braking device. The steering device steers wheels of the vehicle 10. The drive device is a driving source that generates a driving force for the vehicle 10. Examples of the drive device include an engine and an electric motor. The braking device generates a braking force for the vehicle 10. The travel device 60 controls traveling of the vehicle 10 based on traveling controlled variables related to steering, acceleration, and deceleration of the vehicle 10.

The autonomous driving control device 40 is an information processing device that performs various processes for autonomous driving and remote autonomous driving. Typically, the autonomous driving control device 40 is a microcomputer including at least one processor 42, at least one storage device 44, and at least one input and output interface 48. The autonomous driving control device 40 is also referred to as the electronic control unit (ECU).

The storage device 44 stores driving environment information 46 regarding a driving environment of the vehicle 10. The driving environment information 46 includes the surrounding environment information and the vehicle motion information. Examples of the storage device 44 include a volatile memory, a non-volatile memory, and a hard disk drive (HDD).

The storage device 44 has a map database 47 stored therein. The map database 47 is a database that stores map information. The driving environment information 46 includes the map information of the map database 47. The map information includes position information of roads, information on road shapes, numbers of lanes, lane widths, position information of intersections and branch points, and traffic environment information indicating a traffic environment such as levels of priority of roads. The map database 47 may be stored in a server capable of communicating with the vehicle 10, such as the remote server 4 of the remote control device 2.

The processor 42 includes a central processing unit (CPU). The processor 42 is coupled to the storage device 44 and the input and output interface 48. The storage device 44 has stored therein at least one program 45 including a remote support program for autonomous driving and remote autonomous driving. Various functions of the autonomous driving control device 40 are implemented by the processor 42 reading and executing the program 45 stored in the storage device 44.

The input and output interface 48 is an interface for sending and receiving information to and from the remote control device 2. Various kinds of information generated by the autonomous driving control device 40 and a remote control request that will be described later are output to the remote control device 2 via the input and output interface 48.

### 1-3. Features of Remote Support System of First Embodiment

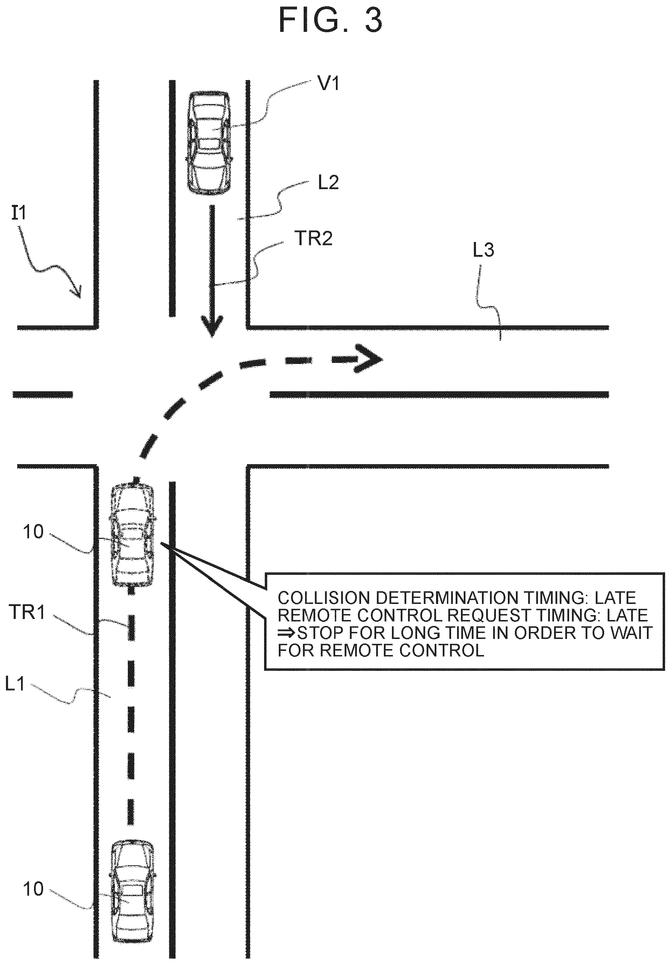

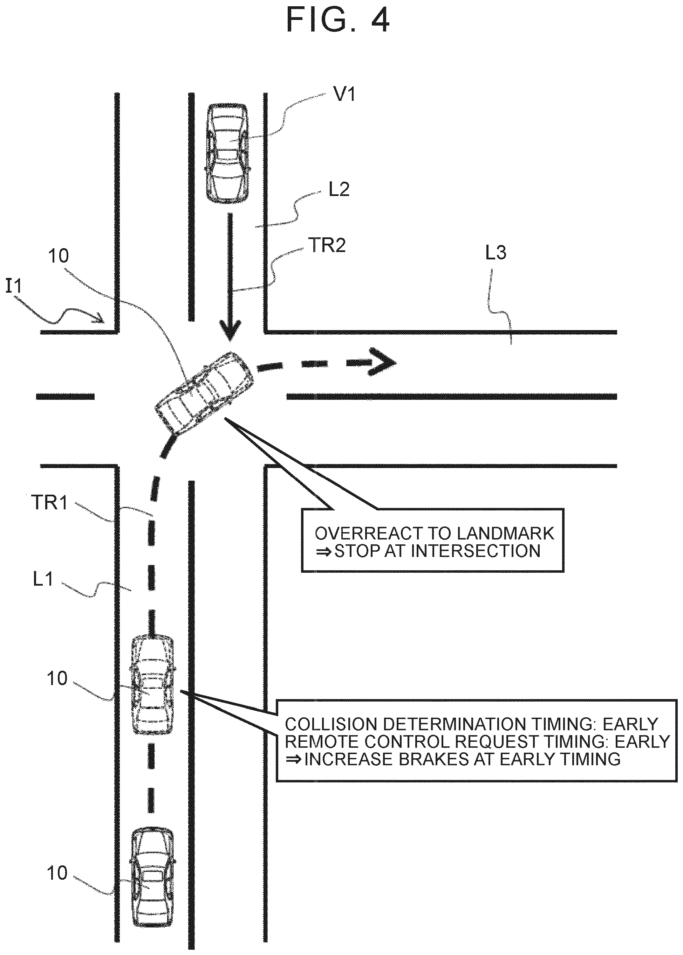

First, an example of a situation in which the remote operator performs remote control in the remote support system 100 of the first embodiment will be described. FIGS. 3 and 4 illustrate an example of a situation in which remote control is performed in the remote support system 100 of the first embodiment.

In FIGS. 3 and 4, the vehicle 10 is traveling in a lane L1. A lane L2 adjacent to the lane L1 is a lane for vehicles traveling in the direction opposite to the direction of travel of the vehicle 10. The lane L1 and the lane L2 intersect a lane L3 at an intersection I1. The vehicle 10 is supposed to turn right into a lane L3 at the intersection I1. An oncoming vehicle V1 in the lane L2 is traveling on the opposite side of the intersection I1 from the vehicle 10. Like the vehicle 10, the oncoming vehicle V1 is also supposed to enter the intersection I1.

In the remote support system 100, when the vehicle 10 is predicted to have difficulty continuing autonomous driving, the vehicle 10 sends a remote control request RQ to the remote control device 2. Typically, in the remote support system 100, when the vehicle 10 is predicted to collide with a landmark to be avoided, a remote control request RQ is sent to the remote control device 2. In the example of the traffic environment shown in FIG. 3, the oncoming vehicle V1 is a landmark to be avoided. The autonomous driving control device 40 generates a travel trajectory TR1 of the vehicle 10 and a predicted trajectory TR2 of the oncoming vehicle V1. The autonomous driving control device 40 then determines based on the travel trajectory TR1 and the predicted trajectory TR2 whether the vehicle 10 is predicted to collide with the oncoming vehicle V1. This determination process is hereinafter referred to as the "collision determination process." For example, an intersection determination process of determining whether the travel trajectory TR1 and the predicted trajectory TR2 intersect is performed in the collision determination process. When the autonomous driving control device 40 determines in the intersection determination process that the travel trajectory TR1 and the predicted trajectory TR2 intersect, the autonomous driving control device 40 determines that the vehicle 10 is predicted to collide with the oncoming vehicle V1.

When the autonomous driving control device 40 determines that the vehicle 10 is predicted to collide with the oncoming vehicle V1, the autonomous driving control device 40 sends a remote control request RQ to the remote control device 2 and also sends, as information necessary for remote control of the vehicle 10, the driving environment information 46 acquired by the information acquisition device 30 to the remote control device 2. The remote control device 2 performs remote autonomous driving by the remote operator in response to the remote control request RQ. Typically, the remote operator makes a determination regarding passage of the vehicle 10 through the intersection I1, based on the driving environment information 46 received from the autonomous driving control device 40. The remote operator then sends remote control commands to the vehicle 10 by operating the remote operator interface 6. The remote control commands may be manipulated variables of the travel device 60 or may be commands of the determination result such as "go," "stop," and "turn right." The vehicle 10 passes through the intersection I1 according to the remote control commands sent from the remote control device 2.

Various parameters that define evaluation criteria are used for calculations in the collision determination process. These parameters are stored in the storage device 44. The parameters include, for example, a parameter A that is a second evaluation criterion focusing on running efficiency and a parameter B that is a first evaluation criterion focusing on safety. The parameter A has a stricter criterion for handling a detected landmark as an object to be avoided than the parameter B. Alternatively, the parameter A handles an object to be avoided as having a higher possibility of complying with traffic rules or customs than the parameter B. Alternatively, the parameter A handles an object to be avoided as having a higher possibility of maintaining its current operating state than the parameter B. According to the invention, the parameter A has a narrower error range that is allowed when determining whether the vehicle 10 will collide with an object to be avoided than the parameter B.

In the example shown in FIG. 3, the autonomous driving control device 40 has performed the collision determination process using the parameter A that focuses on running efficiency. When the parameter A that focuses on running efficiency is used, more emphasis is placed on running efficiency than when the parameter B that focuses on safety is used. In this case, however, the frequency with which a collision determination is made tends to decrease or the timing of making the collision determination tends to be late, as compared to when the parameter B that focuses on safety is used.

When the timing of making the collision determination is late, the timing of sending a remote control request RQ is also delayed. The remote operator needs about 10 to 15 seconds to make a determination before he or she starts remote control after receiving the remote control request RQ. Therefore, when the timing of sending a remote control request RQ is delayed, the vehicle 10 needs to wait for remote control to be started by the remote operator at a predetermined stop position before the predicted collision position. The vehicle 10 waiting on the road may disturb the traffic flow or may cause a rear-end collision etc.

In the example shown in FIG. 4, the autonomous driving control device 40 has performed the collision determination process using the parameter B that focuses on safety. In the collision determination process using the parameter B that focuses on safety, the timing of making the collision determination tends to be early. Accordingly, the timing of sending a remote control request RQ will not be delayed. However, when the timing of sending a remote control request RQ is early, a travel trajectory in which the vehicle starts being slowed down or is stopped at an earlier timing is generated, and factors such as running efficiency and comfort may be adversely affected.

As described above, it is preferable that the collision determination process for sending a remote control request be performed at an early timing in order to allow enough time for the remote operator to make a determination. On the other hand, it is also preferable that the collision determination process for correcting the travel trajectory be performed at a late timing in order to improve running efficiency.

Accordingly, the remote support system 100 of the first embodiment is characterized in that an appropriate one of the parameters that are used for the collision determination process is used depending on the purpose during autonomous driving of the vehicle 10. Typically, the autonomous driving control device 40 uses the parameter B that focuses on safety in the collision determination process for a first determination process of determining the necessity of sending a remote control request. On the other hand, the autonomous driving control device 40 uses the parameter A that focuses on running efficiency in the collision determination processing for a second determination process of determining the necessity of correcting the travel trajectory. By using an appropriate one of the parameters in the collision determination process in this manner, the necessity of sending a remote control request can be determined with emphasis on safety while reducing a decrease in running efficiency of autonomous driving.

Hereinafter, the functional configuration and specific processes of the autonomous driving control device 40 of the remote support system 100 of the first embodiment will be described.

### 1-4. Functional Configuration of Autonomous Driving Control Device

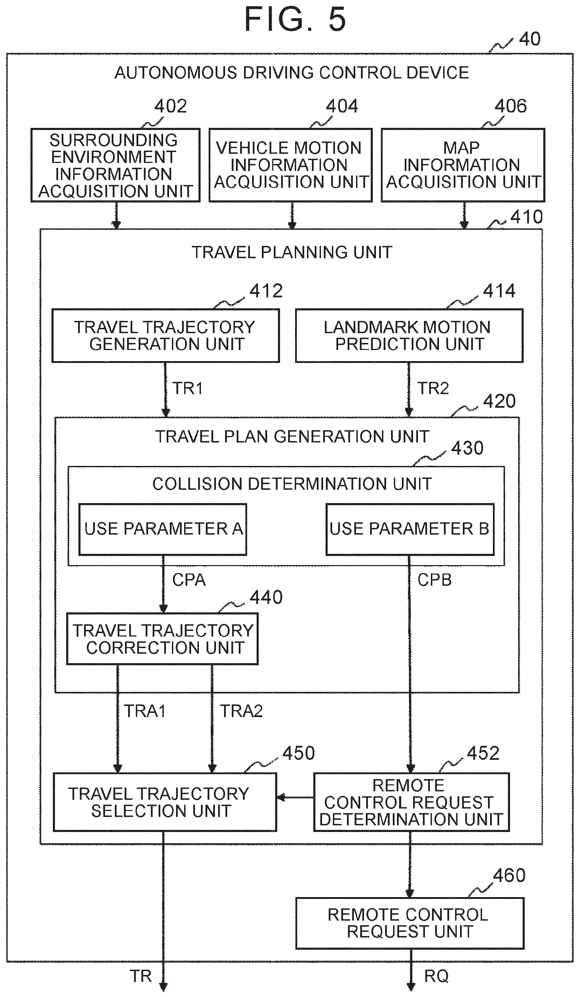

An example of the functional configuration of the autonomous driving control device 40 will be described. FIG. 5 is a functional block diagram showing a part of functions of the autonomous driving control device 40. The autonomous driving control device 40 includes a surrounding environment information acquisition unit 402, a vehicle motion information acquisition unit 404, a map information acquisition unit 406, a travel planning unit 410, and a remote control request unit 460.

The surrounding environment information acquisition unit 402 and the vehicle motion information acquisition unit 404 are functional blocks for acquiring the surrounding environment information and vehicle motion information detected by the information acquisition device 30, respectively. The map information acquisition unit 406 is a functional block for acquiring the map information stored in the map database 47.

The travel planning unit 410 performs the first determination process of determining the necessity of sending a remote control request and the second determination process of determining the necessity of correcting the travel trajectory for autonomous driving of the vehicle 10.

The travel planning unit 410 typically includes a travel trajectory generation unit 412, a landmark motion prediction unit 414, a travel plan generation unit 420, a travel trajectory selection unit 450, and a remote control request determination unit 452.

The travel trajectory generation unit 412 generates a travel trajectory TR1 of the vehicle 10 by using a desired route, position, and speed of the vehicle 10 calculated from the destination, the vehicle motion information, and the map information. The travel trajectory generation unit 412 sends the generated travel trajectory TR1 to the travel plan generation unit 420.

The landmark motion prediction unit 414 performs a predicted trajectory generation process of generating a predicted trajectory TR2 of an object to be avoided that may collide with the autonomous vehicle 10. Examples of the object to be avoided include an oncoming vehicle, a preceding vehicle, and a cross vehicle traveling on a cross road. The landmark motion prediction unit 414 calculates the predicted trajectory TR2 of the object to be avoided by using the position and speed of the object to be avoided that are calculated from the surrounding environment information and the map information. When there are a plurality of predictions such as right turn, left turn, and going straight for the object to be avoided, the landmark motion prediction unit 414 may calculate a plurality of predicted trajectories TR2. The landmark motion prediction unit 414 sends the calculated predicted trajectory TR2 to the travel plan generation unit 420.

The travel plan generation unit 420 includes a collision determination unit 430 and a travel trajectory correction unit 440. The collision determination unit 430 calculates a determination result of whether the vehicle 10 will collide with the object to be avoided, and when the vehicle 10 will collide with the object to be avoided, calculates a predicted collision position CP between the vehicle 10 and the object to be avoided. Typically, the collision determination unit 430 also calculates an area where the travel trajectory TR1 and the predicted trajectory TR2 intersect. The collision determination unit 430 then calculates a determination result of whether the vehicle 10 will collide with the object to be avoided and a predicted collision position CPA by using the evaluation criterion of the parameter A. Since this process is a collision determination process using the parameter A that is the second evaluation criterion, this process is also referred to as the "second collision determination process." The collision determination unit 430 sends the determination result of the second collision determination process and the calculated predicted collision position CPA to the travel trajectory correction unit 440.

The collision determination unit 430 also calculates a determination result of whether the vehicle 10 will collide with the object to be avoided and a predicted collision position CPB by using the evaluation criterion of the parameter B. Since this process is a collision determination process using the parameter B that is the first evaluation criterion, this process is also referred to as the "first collision determination process." The collision determination unit 430 sends the determination result of the first collision determination process and the predicted collision position CPB to the remote control request determination unit 452.

According to the first collision determination process using the evaluation criterion of the parameter B, more emphasis is placed on safety than the evaluation criterion of the parameter A. According to the second collision determination process using the evaluation criterion of the parameter A, more emphasis is placed on running efficiency than the evaluation criterion of the parameter B. Hereinafter, some specific examples of the evaluation criteria of the parameters A, B will be described.

### Evaluation Criteria for Handling as Object to Be Avoided

The travel planning unit 410 handles a detected landmark that is predicted to collide with the vehicle 10 out of detected landmarks included in the received surrounding environment information as an object to be avoided. Each parameter A, B defines an evaluation criterion for handling a detected landmark as an object to be avoided. Typically, the parameter A handles a landmark detected by both a LIDAR and a camera out of a plurality of the surroundings sensors 32 as an object to be avoided. On the other hand, the parameter B handles even a landmark detected by only the camera out of the plurality of surroundings sensors 32 as an object to be avoided. According to the evaluation criterion of the parameter B, a larger number of objects to be avoided are handled than the parameter A.

Alternatively, the surrounding environment information includes a likelihood index value representing the degree of likelihood of a detected landmark. The travel planning unit 410 sets as an object to be avoided a detected landmark having a higher likelihood index value than a predetermined determination threshold out of detected landmarks included in the received surrounding environment information. Each parameter A, B defines a determination threshold for the likelihood index value. The parameter A has a higher determination threshold for the likelihood index value than the parameter B. According to the evaluation criterion of the parameter B, a larger number of objects to be avoided are handled than the parameter A.

### Evaluation Criteria Regarding Possibility of Complying with Traffic Rules or Traffic Customs

The travel planning unit 410 predicts the possibility of a detected landmark complying with traffic rules or traffic customs, and generates a predicted trajectory TR2 of the object to be avoided. Each parameter A, B defines an evaluation criterion regarding the possibility of an object to be avoided complying with the traffic rules or the traffic customs. The parameter A handles an object to be avoided as having a higher possibility of complying with the traffic rules or the traffic customs than the parameter B. Typically, when the detected landmark is a non-priority vehicle stopped at a stop line, the parameter A predicts that the non-priority vehicle will not start moving, and determines to handle the non-priority vehicle as an object to be avoided or generates a predicted trajectory TR2 of the object to be avoided. On the other hand, the parameter B determines to handle the non-priority vehicle as an object to be avoided or generates a predicted trajectory TR2 of the object to be avoided in view of the fact that the non-priority vehicle may ignore the traffic rules or the traffic customs and start moving.

Alternatively, when the detected landmark is an oncoming vehicle waiting to turn right in the oncoming lane ahead of the vehicle 10, the parameter A predicts that the oncoming vehicle will comply with the traffic rules or the traffic customs and continue to wait to turn right, and determines to handle the oncoming vehicle as an object to be avoided or generates a predicted trajectory TR2 of the object to be avoided. On the other hand, the parameter B determines to handle the oncoming vehicle as an object to be avoided or generates a predicted trajectory TR2 of the object to be avoided in view of the fact that the oncoming vehicle may ignore the traffic rules or the traffic customs and turn right.

### Evaluation Criteria Regarding Possibility of Object to Be Avoided Maintaining Its Motion

The travel planning unit 410 predicts the possibility of an object to be avoided maintaining its motion in the future and generates a predicted trajectory TR2 of the object to be avoided. Each parameter A, B defines an evaluation criterion regarding the possibility of an object to be avoided maintaining its motion in the future. The parameter A predicts that the object to be avoided has a higher possibility of maintaining its current motion than the parameter B, and determines to handle the object to be avoided or generates a predicted trajectory TR2 of the object to be avoided. Typically, when the detected landmark is a vehicle, the parameter A assumes that the vehicle will maintain its current traveling, and determines to handle the vehicle as an object to be avoided or generates a predicted trajectory TR2 of the object to be avoided. On the other hand, the parameter B predicts that the vehicle will not only maintain its current traveling but also travel differently, and determines to handle the vehicle as an object to be avoided or generates a predicted trajectory TR2 of the object to be avoided.

Alternatively, when the detected landmark is a pedestrian walking around a pedestrian crossing, the parameter A assumes that the pedestrian will keep walking, and determines whether the pedestrian will reach the pedestrian crossing. On the other hand, the parameter B assumes that the pedestrian will not keep walking and will start running, and determines whether the pedestrian will reach the pedestrian crossing.

### Evaluation Criteria Regarding Allowable Error

The travel planning unit 410 predicts that the vehicle 10 may collide with an object to be avoided when the travel trajectory TR1 of the vehicle 10 intersect the predicted trajectory TR2 of the object to be avoided. Each parameter A, B defines an evaluation criterion regarding an allowable error when determining whether the trajectories intersect. Typically, the parameter A determines whether the trajectories intersect in view of a 2σ error ellipse. The parameter B determines whether the trajectories intersect in view of a 3σ error ellipse.

Referring back to FIG. 5, the travel trajectory correction unit 440 corrects the travel trajectory TR1 based on the result of the second collision determination process using the evaluation criterion of the parameter A. Typically, when the result of the second collision determination process is that the vehicle 10 will collide with the object to be avoided, the travel trajectory correction unit 440 generates a travel trajectory TRA1 by correcting the travel trajectory TR1 so as to avoid the collision with the object to be avoided, based on the position and speed of the vehicle 10, the map information, the travel trajectory TR1, the predicted trajectory TR2, and the predicted collision position CPA. On the other hand, when the result of the second collision determination process is that the vehicle 10 will not collide with the object to be avoided, the travel trajectory correction unit 440 generates the travel trajectory TR1 as it is as the travel trajectory TRA1. In parallel with the generation of the travel trajectory TRA1, the travel trajectory correction unit 440 generates a travel trajectory TRA2 by correcting the travel trajectory TR1 so that the vehicle 10 will stop immediately before the predicted collision position CPA or at a predetermined stop line before entering the intersection and wait for remote control, based on the position and speed of the vehicle 10, the map information, the travel trajectory TR1, the predicted trajectory TR2, and the predicted collision position CPA. The travel trajectory correction unit 440 sends the generated travel trajectories TRA1, TRA2 to the travel trajectory selection unit 450.

The remote control request determination unit 452 determines the necessity of sending a remote control request, based on the result of the first collision determination process using the evaluation criterion of the parameter B. Typically, when the result of the first collision determination process is that the vehicle 10 will not collide with the object to be avoided, that is, when there is no predicted collision position CPB to be input to the remote control request determination unit 452, the remote control request determination unit 452 determines that it is not necessary to send a remote control request. When the result of the first collision determination process is that the vehicle 10 will collide with the object to be avoided, the remote control request determination unit 452 determines the traffic priority situation at the predicted collision position CPB using the map information or the surrounding environment information. When the traffic priority situation at the predicted collision position CPB is a situation in which the vehicle 10 has priority, the remote control request determination unit 452 determines that it is not necessary to send a remote control request. When the traffic priority situation at the predicted collision position CPB is a situation in which the vehicle 10 does not have priority, the remote control request determination unit 452 determines that it is necessary to send a remote control request. The remote control request determination unit 452 sends the determination result regarding the necessity of sending a remote control request to the remote control request unit 460. The remote control request determination unit 452 also sends the determination result regarding the necessity of sending a remote control request to the travel trajectory selection unit 450.

The travel trajectory selection unit 450 selects a travel trajectory TR to be sent to the travel device 60 based on the determination result regarding the necessity of sending a remote control request. Typically, when the remote control request determination unit 452 determines that it is necessary to send a remote control request, the travel trajectory selection unit 450 selects the travel trajectory TRA2 as the travel trajectory TR. When the remote control request determination unit 452 determines that it is not necessary to send a remote control request, the travel trajectory selection unit 450 selects the travel trajectory TRA1 as the travel trajectory TR. The travel trajectory selection unit 450 sends the selected travel trajectory TR to the travel device 60.

The remote control request unit 460 is a unit for sending via the communication network N a remote control request to the remote operator who operates the remote control device 2. The remote control request unit 460 sends a remote control request RQ to the remote control device 2 according to the determination result regarding the necessity of sending a remote control request received from the remote control request determination unit 452.

### 1-5. Specific Process That Is Performed by Autonomous Driving Control Device

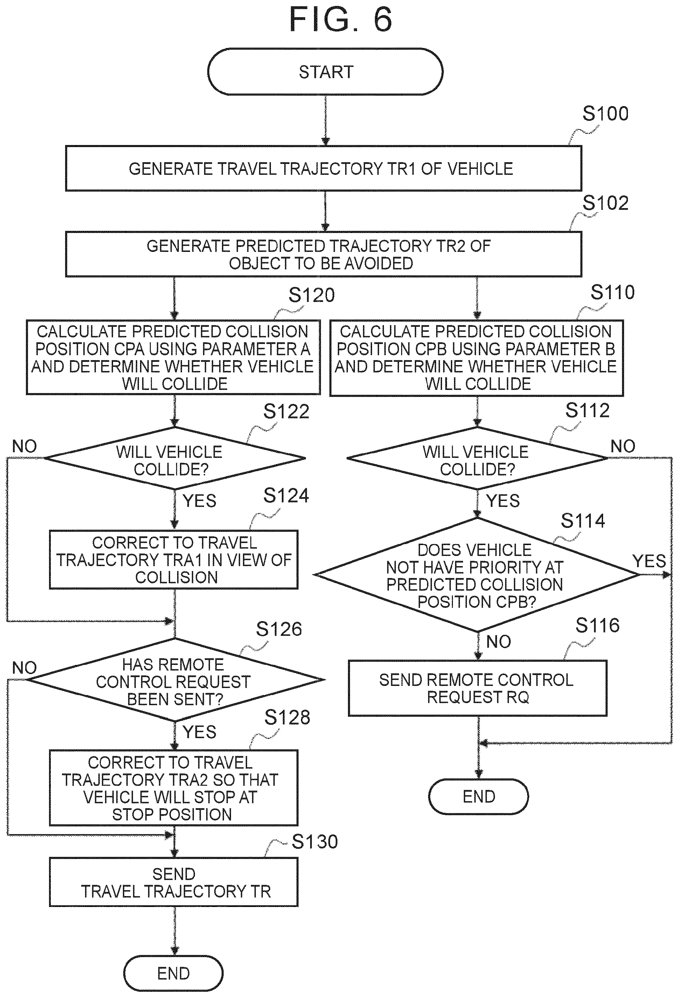

FIG. 6 is a flowchart of a process that is performed by the autonomous driving control device 40. The autonomous driving control device 40 repeatedly executes the routine shown in FIG. 6 during autonomous driving of the vehicle 10.

In step S100 of the routine shown in FIG. 6, the travel trajectory generation unit 412 generates a travel trajectory TR1 of the vehicle 10. In the following step S102, the landmark motion prediction unit 414 generates a predicted trajectory TR2 of an object to be avoided. After step S102 is performed, the first determination process from step S110 to step S116 and the second determination process from step S120 to step S130 are performed in parallel.

In the first determination process, the first collision determination process is first performed in step S110 using the evaluation criterion of the parameter B that focuses on safety. Typically, in the first collision determination process, it is determined whether the vehicle 10 will collide with the object to be avoided, and a predicted collision position CPB is calculated. In the following step S112, it is determined whether the vehicle 10 will collide with the object to be avoided. In this example, the collision determination unit 430 determines that the vehicle 10 will collide with the object to be avoided when a valid predicted collision position CPB has been calculated.

When it is determined in step S112 that the vehicle 10 will not collide with the object to be avoided, it is determined that it is not necessary to send a remote control request. In this case, the remote control request determination unit 452 determines that it is not necessary to send a remote control request, and this routine ends without sending a remote control request RQ.

On the other hand, when it is determined in step S112 that the vehicle 10 will collide with the object to be avoided, the routine proceeds to step S114. In step S114, the remote control request determination unit 452 determines based on the map information and the predicted collision position CPB whether the vehicle 10 is in a traffic environment in which the vehicle 10 does not have priority over the object to be avoided at the predicted collision position CPB. When the vehicle 10 has priority over the object to be avoided at the predicted collision position CPB, the remote control request determination unit 452 determines that the vehicle 10 will not collide with the object to be avoided and thus determines that it is not necessary to send a remote control request.

On the other hand, when the vehicle 10 does not have priority over the object to be avoided at the predicted collision position CPB, the remote control request determination unit 452 determines that the vehicle 10 is predicted to collide with the object to be avoided. In this case, the routine proceeds to step S116. In step S116, the remote control request determination unit 452 determines that it is necessary to send a remote control request, and sends a remote control request RQ.

In the second determination process, the second collision determination process is first performed in step S120 using the evaluation criterion of the parameter A that focuses on running efficiency. Typically, in the second collision determination process, it is determined whether the vehicle 10 will collide with the object to be avoided, and a predicted collision position CPA is calculated. In the following step S122, it is determined whether the vehicle 10 will collide with the object to be avoided. In this example, the collision determination unit 430 determines that the vehicle 10 will collide with the object to be avoided when a valid predicted collision position CPA has been calculated.

When the collision determination unit 430 determines in step S122 that the vehicle 10 will not collide with the object to be avoided, the collision determination unit 430 determines that it is not necessary to correct the travel trajectory TR1 generated in step S100. In this case, the travel trajectory correction unit 440 generates the travel trajectory TR1 as a travel trajectory TRA1, and the routine proceeds to step S126. On the other hand, when the collision determination unit 430 determines in step S 122 that the vehicle 10 will collide with the object to be avoided, the routine proceeds to step S124.

In step S124, the travel trajectory correction unit 440 generates a travel trajectory TRA1 by correcting the travel trajectory TR1 in view of the collision with the object to be avoided at the predicted collision position CPA. After step S124 is performed, the routine proceeds to step S126.

In step S126, it is determined whether the remote control request RQ has been sent in step S116. When the remote control request RQ has not been sent, the travel trajectory TRA1 is selected as a travel trajectory TR, and the routine proceeds to step S130. On the other hand, when the remote control request RQ has been sent, the routine proceeds to step S128.

The travel trajectory correction unit 440 generates a travel trajectory TRA2 by correcting the travel trajectory TR1 so that the vehicle 10 will stop immediately before the predicted collision position CPA or at a predetermined stop line before entering the intersection and wait for remote control. In step S128, the travel trajectory TRA2 is selected as the travel trajectory TR, and the routine proceeds to step S130.

In step S130, the selected travel trajectory TR is sent to the travel device 60. The travel device 60 continues autonomous driving of the vehicle 10 according to the travel trajectory TR.

As described above, according to the remote support method by the remote support system 100 of the first embodiment, the parameter B focusing on safety is used in the first determination process, and the parameter A focusing on running efficiency is used in the second determination process. According to such a configuration, the vehicle 10 can travel with emphasis on running efficiency while determining the necessity of sending a remote control request with emphasis on safety.

### 1-6. Modifications

The remote support system 100 of the first embodiment may employ the following modified modes.

There is no limitation on the functional arrangement of the autonomous driving control device 40. That is, a part or all of the functions of the autonomous driving control device 40 may be mounted on the vehicle 10 or may be provided in the remote server 4 of the remote control device 2.

The routine shown in FIG. 6 is not limited to the example in which the first determination process of steps S110 to S116 and the second determination process of steps S120 to S130 are performed in parallel. The first determination process of steps S110 to S116 and the second determination process of steps S120 to S130 may be performed sequentially. In this case, for example, the first determination process of steps S110 to S116 is performed before the second determination process of steps S120 to S130.

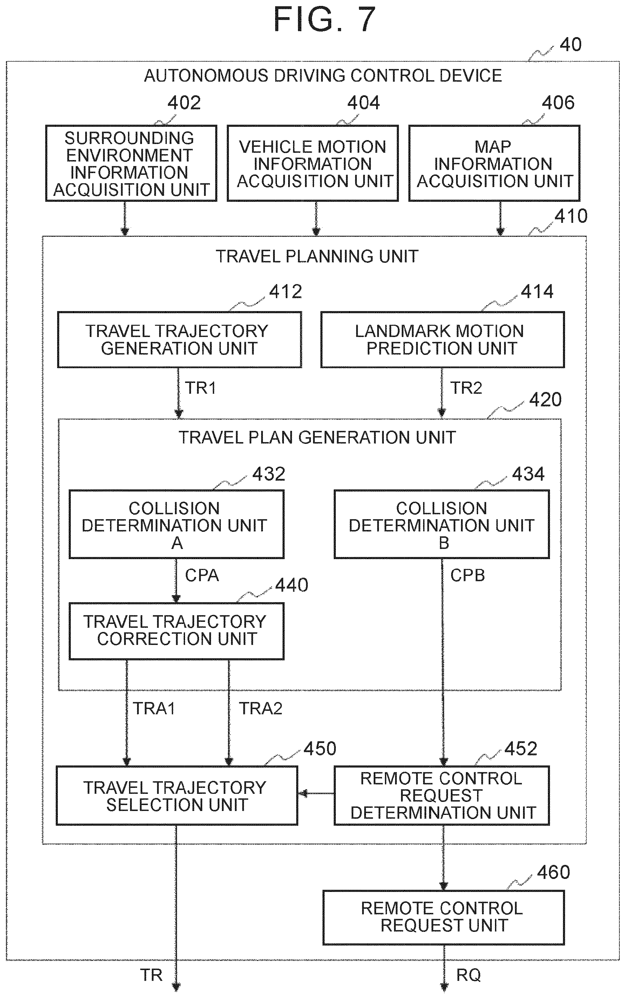

In the autonomous driving control device 40 of the first embodiment, the collision determination processes using the different parameters A, B are performed by the common collision determination unit 430. However, the autonomous driving control device 40 may include a plurality of collision determination units each performing a collision determination process using a unique parameter. FIG. 7 illustrates a modification of the autonomous driving control device 40 of the first embodiment. The autonomous driving control device 40 shown in FIG. 7 has a configuration similar to that of FIG. 5 except that the autonomous driving control device 40 shown in FIG. 7 includes a collision determination unit A 432 and a collision determination unit B 434 instead of the collision determination unit 430 of FIG. 5.

The collision determination unit A 432 is a functional block for performing a collision determination process using a unique parameter equivalent to the parameter A. That is, the collision determination unit A 432 has functions similar to those of the collision determination process that is performed by the collision determination unit 430 using the parameter A. The collision determination unit B 434 is a functional block for performing a collision determination process using a unique parameter equivalent to the parameter B. That is, the collision determination unit B 434 has functions similar to those of the collision determination process that is performed by the collision determination unit 430 using the parameter B. According to such a configuration, processing similar to that implemented by the collision determination unit 430 of the first embodiment can be implemented by the collision determination unit A 432 and the collision determination unit B 434.

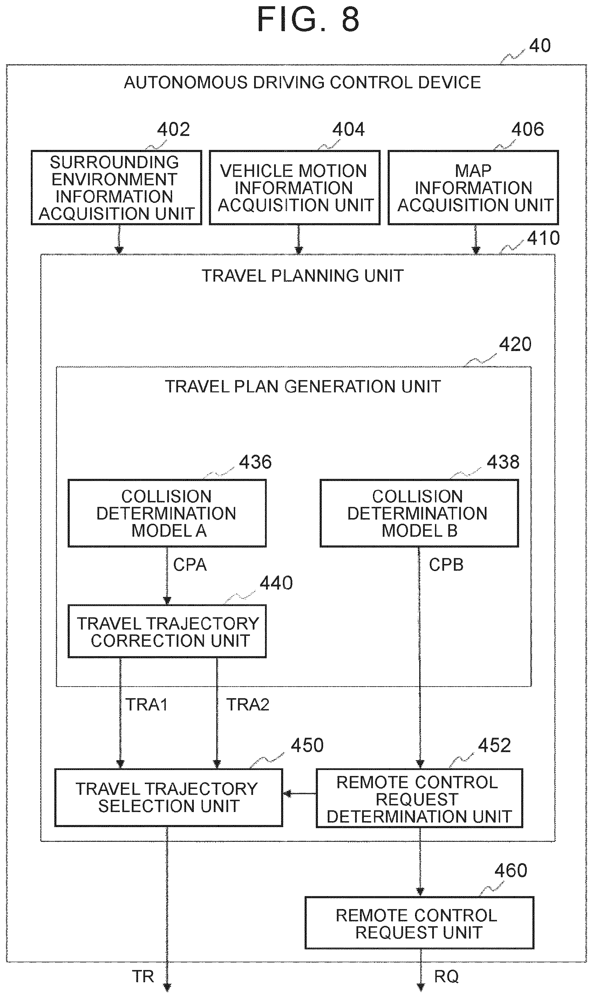

FIG. 8 illustrates another modification of the autonomous driving control device 40 of the first embodiment. The autonomous driving control device 40 shown in FIG. 8 has a configuration similar to that of FIG. 5 except that the autonomous driving control device 40 shown in FIG. 8 includes a collision determination model A 436 and a collision determination model B 438 instead of the travel trajectory generation unit 412, the landmark motion prediction unit 414, and the collision determination unit 430 of FIG. 5.

The collision determination model A 436 is a machine learning model for performing a determination process equivalent to the collision determination process using the parameter A. That is, the collision determination model A 436 has functions similar to those of the collision determination process that is performed by the collision determination unit 430 using the parameter A. For example, regarding generation of a travel trajectory, the collision determination model A 436 performs model learning with a prediction ground truth of returning True at the timing when slowing down is necessary. The collision determination model B 438 is a functional block for performing a collision determination process using the parameter B. That is, the collision determination model B 438 has functions similar to those of the collision determination process that is performed by the collision determination unit 430 using the parameter B. For example, regarding a remote control request, the collision determination model B 438 performs model learning with a prediction ground truth of returning True at the timing when it is necessary to send a remote control request. According to such a configuration, processing similar to that implemented by the collision determination unit 430 of the first embodiment can be implemented by the collision determination model A 436 and the collision determination model B 438.

## Claims

1. A remote support system (100) configured to send a remote control request to a remote operator when a vehicle (10) configured to drive autonomously is predicted to have difficulty continuing autonomous driving, the remote control request being a request requesting remote control of the vehicle (10), the remote support system (100) comprising:
a storage device (44) storing instructions; and
at least one processor (42) connected to the storage device (44), wherein
the at least one processor (42) is configured to
acquire driving environment information of the vehicle (10),
perform a determination process of determining whether the vehicle (10) has difficulty continuing the autonomous driving, based on a future travel trajectory of the vehicle (10) generated based on the driving environment information,
determine necessity of sending the remote control request, based on a determination result of the determination process performed based on a first evaluation criterion, and
determine necessity of correcting the travel trajectory, based on a determination result of the determination process performed based on a second evaluation criterion, and
the first evaluation criterion is an evaluation criterion that focuses on safety of the vehicle (10) more than the second evaluation criterion, and
the second evaluation criterion is an evaluation criterion that focuses on running efficiency of the vehicle (10) more than the first evaluation criterion, wherein:
the determination process includes a predicted trajectory generation process, the predicted trajectory generation process being a process of generating a future predicted trajectory of an object to be avoided based on the driving environment information; and
the at least one processor (42) is configured to determine whether the vehicle (10) has difficulty continuing the autonomous driving based on the predicted trajectory and the travel trajectory, and
the at least one processor (42) is configured to estimate a position at which the vehicle (10) has difficulty continuing the autonomous driving, determine whether the vehicle has traffic priority at the estimated position, and send a remote control request that requests remote control to the vehicle (10) when the vehicle (10) does not have traffic priority at the estimated position, **characterized in that**:
the determination process includes an intersection determination process, the intersection determination process being a process of determining whether the predicted trajectory and the travel trajectory intersect;
the at least one processor (42) is configured to determine, based on a determination result of the intersection determination process, whether the vehicle (10) is going to have difficulty continuing the autonomous driving;
the first evaluation criterion and the second evaluation criterion include an evaluation criterion regarding an error range allowed in the intersection determination process; and
in the intersection determination process, the error range of the second evaluation criterion is narrower than the error range of the first evaluation criterion.

2. A remote support method for a vehicle (10) configured to drive autonomously, comprising:
performing a determination process of determining whether the vehicle (10) has difficulty continuing the autonomous driving, based on a future travel trajectory of the vehicle (10) generated based on driving environment information;
determining necessity of sending the remote control request, based on a determination result of the determination process performed based on a first evaluation criterion;
sending a remote control request to a remote operator when the vehicle (10) is predicted to have difficulty continuing autonomous driving and based on a determination result of the determining necessity of sending the remote control request, the remote control request being a request requesting remote control of the vehicle (10); and
determining necessity of correcting the travel trajectory, based on a determination result of the determination process performed based on a second evaluation criterion, wherein
the first evaluation criterion is an evaluation criterion that focuses on safety of the vehicle (10) more than the second evaluation criterion, and the second evaluation criterion is an evaluation criterion that focuses on running efficiency of the vehicle (10) more than the first evaluation criterion, wherein:
the determination process includes a predicted trajectory generation process, the predicted trajectory generation process being a process of generating a future predicted trajectory of an object to be avoided based on the driving environment information; and
the determining whether the vehicle (10) has difficulty continuing the autonomous driving is based on the predicted trajectory and the travel trajectory, and
the remote support method comprises estimating a position at which the vehicle (10) has difficulty continuing the autonomous driving, determining whether the vehicle has traffic priority at the estimated position, and sending a remote control request that requests remote control to the vehicle (10) when the vehicle (10) does not have traffic priority at the estimated position, **characterized in that**:
the determination process includes an intersection determination process, the intersection determination process being a process of determining whether the predicted trajectory and the travel trajectory intersect;
the determining whether the vehicle (10) is going to have difficulty continuing the autonomous driving is based on a determination result of the intersection determination process;
the first evaluation criterion and the second evaluation criterion include an evaluation criterion regarding an error range allowed in the intersection determination process; and
in the intersection determination process, the error range of the second evaluation criterion is narrower than the error range of the first evaluation criterion.

3. A non-transitory storage medium storing instructions that are executable by one or more processors (42) and that cause the one or more processors (42) to perform the remote support method of claim 2.

## Patentansprüche

1. Fernunterstützungssystem (100), das dazu ausgestaltet ist, eine Fernsteuerungsanforderung an einen räumlich abgesetzten Bediener zu senden, wenn vorausgesagt wird, dass ein zum autonomen Fahren ausgestaltetes Fahrzeug (10) Schwierigkeiten bei der Fortsetzung des autonomen Fahrens haben wird, wobei die Fernsteuerungsanforderung eine Anforderung ist, die eine Fernsteuerung des Fahrzeugs (10) anfordert, wobei das Fernunterstützungssystem (100) umfasst:
eine Speichervorrichtung (44), die Instruktionen speichert, und
mindestens einen Prozessor (42), der mit der Speichervorrichtung (44) verbunden ist, wobei
der mindestens eine Prozessor (42) ausgestaltet ist zum:
Erfassen von Fahrumgebungsinformationen des Fahrzeugs (10),
Durchführen eines Bestimmungsprozesses des Bestimmens, ob das Fahrzeug (10) Schwierigkeiten bei der Fortsetzung des autonomen Fahrens hat, auf der Grundlage einer zukünftigen Fahrtrajektorie des Fahrzeugs (10), die auf der Grundlage der Fahrumgebungsinformationen generiert wurde,
Bestimmen einer Notwendigkeit des Sendens der Fernsteuerungsanforderung auf der Grundlage eines Bestimmungsergebnisses des Bestimmungsprozesses, der auf der Grundlage eines ersten Evaluierungskriteriums durchgeführt wurde, und
Bestimmen einer Notwendigkeit des Korrigierens der Fahrtrajektorie auf der Grundlage eines Bestimmungsergebnisses des Bestimmungsprozesses, der auf der Grundlage eines zweiten Evaluierungskriteriums durchgeführt wurde, und
wobei das erste Evaluierungskriterium ein Evaluierungskriterium ist, das stärker auf die Sicherheit des Fahrzeugs (10) fokussiert ist als das zweite Evaluierungskriterium, und
wobei das zweite Evaluierungskriterium ein Evaluierungskriterium ist, das stärker auf die Fahreffizienz des Fahrzeugs (10) fokussiert ist als das erste Evaluierungskriterium, wobei:
der Bestimmungsprozess einen Prozess zum Generieren einer vorhergesagten Trajektorie umfasst, wobei der Prozess zum Generieren einer vorhergesagten Trajektorie ein Prozess zum Generieren einer zukünftigen vorhergesagten Trajektorie eines zu vermeidenden Objekts auf der Grundlage der Fahrumgebungsinformationen ist, und
der mindestens eine Prozessor (42) dazu ausgestaltet ist, auf der Grundlage der vorhergesagten Trajektorie und der Fahrtrajektorie zu bestimmen, ob das Fahrzeug (10) Schwierigkeiten bei der Fortsetzung des autonomen Fahrens hat, und
der mindestens eine Prozessor (42) dazu ausgestaltet ist, eine Position zu schätzen, an der das Fahrzeug (10) Schwierigkeiten bei der Fortsetzung des autonomen Fahrens hat, zu bestimmen, ob das Fahrzeug an der geschätzten Position Vorfahrt hat, und eine an das Fahrzeug (10) Fernsteuerungsanforderung zu senden, die eine Fernsteuerung anfordert, wenn das Fahrzeug (10) an der geschätzten Position keine Vorfahrt hat, **dadurch gekennzeichnet, dass**:
der Bestimmungsprozess einen Kreuzungsbestimmungsprozess umfasst, wobei der Kreuzungsbestimmungsprozess ein Prozess ist, um zu bestimmen, ob sich die vorhergesagte Trajektorie und die tatsächliche Fahrtrajektorie schneiden,
der mindestens eine Prozessor (42) dazu ausgestaltet ist, auf der Grundlage eines Bestimmungsergebnisses des Kreuzungsbestimmungsprozesses zu bestimmen, ob das Fahrzeug (10) Schwierigkeiten bei der Fortsetzung des autonomen Fahrens haben wird,
das erste Evaluierungskriterium und das zweite Evaluierungskriterium ein Evaluierungskriterium bezüglich eines in dem Kreuzungsbestimmungsprozess zulässigen Fehlerbereichs umfassen, und
in dem Kreuzungsbestimmungsprozess der Fehlerbereich des zweiten Evaluierungskriteriums schmaler ist als der Fehlerbereich des ersten Evaluierungskriteriums.

2. Fernunterstützungsverfahren für ein Fahrzeug (10), das zum autonomes Fahren ausgestaltet ist, umfassend:
Durchführen eines Bestimmungsprozesses des Bestimmens, ob das Fahrzeug (10) Schwierigkeiten bei der Fortsetzung des autonomen Fahrens hat, auf der Grundlage einer zukünftigen Fahrtrajektorie des Fahrzeugs (10), die auf der Grundlage von Fahrumgebungsinformationen generiert wurde,
Bestimmen einer Notwendigkeit des Sendens der Fernsteuerungsanforderung auf der Grundlage eines Bestimmungsergebnisses des Bestimmungsprozesses, der auf der Grundlage eines ersten Evaluierungskriteriums durchgeführt wurde,
Senden einer Fernsteuerungsanforderung an einen räumlich abgesetzten Bediener, wenn vorhergesagt wird, dass das Fahrzeug (10) Schwierigkeiten bei der Fortsetzung des autonomen Fahrens haben wird, und auf der Grundlage eines Bestimmungsergebnisses des Bestimmens einer Notwendigkeit des Sendens der Fernsteuerungsanforderung, wobei die Fernsteuerungsanforderung eine Anforderung ist, die eine Fernsteuerung des Fahrzeugs (10) anfordert, und
Bestimmen einer Notwendigkeit des Korrigierens der Fahrtrajektorie auf der Grundlage eines Bestimmungsergebnisses des Bestimmungsprozesses, der auf der Grundlage eines zweiten Evaluierungskriteriums durchgeführt wurde, wobei
wobei das erste Evaluierungskriterium ein Evaluierungskriterium ist, das stärker auf die Sicherheit des Fahrzeugs (10) fokussiert ist als das zweite Evaluierungskriterium, und wobei das zweite Evaluierungskriterium ein Evaluierungskriterium ist, das stärker auf die Fahreffizienz des Fahrzeugs (10) fokussiert ist als das erste Evaluierungskriterium, wobei:
der Bestimmungsprozess einen Prozess zum Generieren einer vorhergesagten Trajektorie umfasst, wobei der Prozess zum Generieren einer vorhergesagten Trajektorie ein Prozess zum Generieren einer zukünftigen vorhergesagten Trajektorie eines zu vermeidenden Objekts auf der Grundlage der Fahrumgebungsinformationen ist, und
das Bestimmen, ob das Fahrzeug (10) Schwierigkeiten bei der Fortsetzung des autonomen Fahrens hat, auf der vorhergesagten Trajektorie und der Fahrtrajektorie basiert, und
das Fernunterstützungsverfahren umfasst, eine Position zu schätzen, an der das Fahrzeug (10) Schwierigkeiten bei der Fortsetzung des autonomen Fahrens hat, zu bestimmen, ob das Fahrzeug an der geschätzten Position Vorfahrt hat, und eine an das Fahrzeug (10) Fernsteuerungsanforderung zu senden, die eine Fernsteuerung anfordert, wenn das Fahrzeug (10) an der geschätzten Position keine Vorfahrt hat, **dadurch gekennzeichnet, dass**:
der Bestimmungsprozess einen Kreuzungsbestimmungsprozess umfasst, wobei der Kreuzungsbestimmungsprozess ein Prozess ist, um zu bestimmen, ob sich die vorhergesagte Trajektorie und die tatsächliche Fahrtrajektorie schneiden,
das Bestimmen, ob das Fahrzeug (10) Schwierigkeiten bei der Fortsetzung des autonomen Fahrens haben wird, auf einem Bestimmungsergebnis des Kreuzungsbestimmungsprozesses basiert,
das erste Evaluierungskriterium und das zweite Evaluierungskriterium ein Evaluierungskriterium bezüglich eines in dem Kreuzungsbestimmungsprozess zulässigen Fehlerbereichs umfassen, und
in dem Kreuzungsbestimmungsprozess der Fehlerbereich des zweiten Evaluierungskriteriums schmaler ist als der Fehlerbereich des ersten Evaluierungskriteriums.

3. Nicht-transitorisches Speichermedium, das Instruktionen speichert, die durch einen oder mehreren Prozessoren (42) ausführbar sind und die den einen oder die mehreren Prozessoren (42) veranlassen, das Fernunterstützungsverfahren nach Anspruch 2 auszuführen.

## Revendications

1. Système d'assistance à distance (100) configuré pour envoyer une demande de commande à distance à un opérateur à distance quand un véhicule (10) configuré pour se conduire de façon autonome est prédit avoir une difficulté à poursuivre la conduite autonome, la demande de commande à distance étant une demande qui demande une commande à distance du véhicule (10), le système d'assistance à distance (100) comprenant :
un dispositif de stockage (44) qui stocke des instructions ; et
au moins un processeur (42) relié au dispositif de stockage (44), dans lequel
l'au moins un processeur (42) est configuré pour
acquérir de l'information d'environnement de conduite du véhicule (10),
réaliser un processus de détermination pour déterminer si le véhicule (10) a une difficulté à poursuivre la conduite autonome, sur la base d'une trajectoire de déplacement future du véhicule (10) générée sur la base de l'information d'environnement de conduite,
déterminer une nécessité d'envoyer la demande de commande à distance, sur la base d'un résultat de détermination du processus de détermination réalisé sur la base d'un premier critère d'évaluation, et
déterminer une nécessité de corriger la trajectoire de déplacement, sur la base d'un résultat de détermination du processus de détermination réalisé sur la base d'un deuxième critère d'évaluation, et
le premier critère d'évaluation est un critère d'évaluation qui se concentre davantage sur la sécurité du véhicule (10) que le deuxième critère d'évaluation, et
le deuxième critère d'évaluation est un critère d'évaluation qui se concentre davantage sur l'efficacité de déplacement du véhicule (10) que le premier critère d'évaluation, dans lequel :
le processus de détermination comprend un processus de génération de trajectoire prédite, le processus de génération de trajectoire prédite étant un processus de génération d'une trajectoire prédite future d'un objet devant être évité sur la base de l'information d'environnement de conduite ; et
l'au moins un processeur (42) est configuré pour déterminer si le véhicule (10) a une difficulté à poursuivre la conduite autonome sur la base de la trajectoire prédite et de la trajectoire de déplacement, et
l'au moins un processeur (42) est configuré pour estimer une position dans laquelle le véhicule (10) a une difficulté à poursuivre la conduite autonome, déterminer si le véhicule a une priorité de trafic dans la position estimée, et envoyer une demande de commande à distance qui demande une commande à distance envers le véhicule (10) quand le véhicule (10) n'a pas une priorité de trafic dans la position estimée, **caractérisé en ce que** :
le processus de détermination comprend un processus de détermination d'intersection, le processus de détermination d'intersection étant un processus destiné à déterminer si la trajectoire prédite et la trajectoire de déplacement se croisent ;
l'au moins un processeur (42) est configuré pour déterminer, sur la base d'un résultat de détermination du processus de détermination d'intersection, si le véhicule (10) va avoir une difficulté à poursuivre la conduite autonome ;
le premier critère d'évaluation et le deuxième critère d'évaluation comprennent un critère d'évaluation concernant une plage d'erreur permise dans le processus de détermination d'intersection ; et
dans le processus de détermination d'intersection, la plage d'erreur du deuxième critère d'évaluation est plus étroite que la plage d'erreur du premier critère d'évaluation.

2. Procédé d'assistance à distance pour un véhicule (10) configuré pour se conduire de façon autonome, comprenant :
la réalisation d'un processus de détermination pour déterminer si le véhicule (10) a une difficulté à poursuivre la conduite autonome, sur la base d'une trajectoire de déplacement future du véhicule (10) générée sur la base d'une information d'environnement de conduite ;
la détermination de la nécessité d'envoyer la demande de commande à distance, sur la base d'un résultat de détermination du processus de détermination réalisé sur la base d'un premier critère d'évaluation ;
l'envoi d'une demande de commande à distance à un opérateur à distance quand le véhicule (10) est prédit avoir une difficulté à poursuivre la conduite autonome et sur la base d'un résultat de détermination de la détermination de la nécessité d'envoyer la demande de commande à distance, la demande de commande à distance étant une demande qui demande une commande à distance du véhicule (10) ; et
la détermination de la nécessité de corriger la trajectoire de déplacement, sur la base d'un résultat de détermination du processus de détermination réalisé sur la base d'un deuxième critère d'évaluation,
le premier critère d'évaluation étant un critère d'évaluation qui se concentre davantage sur la sécurité du véhicule (10) que le deuxième critère d'évaluation, et le deuxième critère d'évaluation étant un critère d'évaluation qui se concentre davantage sur l'efficacité de déplacement du véhicule (10) que le premier critère d'évaluation, selon lequel :
le processus de détermination comprend un processus de génération de trajectoire prédite, le processus de génération de trajectoire prédite étant un processus de génération d'une trajectoire prédite future d'un objet devant être évité sur la base de l'information d'environnement de conduite ; et
la détermination du fait que le véhicule (10) a une difficulté à poursuivre la conduite autonome est basée sur la trajectoire prédite et la trajectoire de déplacement, et
le procédé d'assistance à distance comprend l'estimation d'une position dans laquelle le véhicule (10) a une difficulté à poursuivre la conduite autonome, la détermination du fait que le véhicule a une priorité de trafic dans la position estimée, et l'envoi d'une demande de commande à distance qui demande une commande à distance envers le véhicule (10) quand le véhicule (10) n'a pas la priorité de trafic dans la position estimée, **caractérisé en ce que** :
le processus de détermination comprend un processus de détermination d'intersection, le processus de détermination d'intersection étant un processus destiné à déterminer si la trajectoire prédite et la trajectoire de déplacement se croisent ;
la détermination du fait que le véhicule (10) va avoir une difficulté à poursuivre la conduite autonome est basée sur un résultat de détermination du processus de détermination d'intersection ;
le premier critère d'évaluation et le deuxième critère d'évaluation comprennent un critère d'évaluation concernant une plage d'erreur permise dans le processus de détermination d'intersection ; et
dans le processus de détermination d'intersection, la plage d'erreur du deuxième critère d'évaluation est plus étroite que la plage d'erreur du premier critère d'évaluation.

3. Support de stockage non-transitoire stockant des instructions qui peuvent être exécutées par un ou plusieurs processeurs (42) et qui amènent les un ou plusieurs processeurs (42) à mettre en œuvre le procédé d'assistance à distance selon la revendication 2.
